# DEMANDE DE BREVET EUROPEEN

(11) **EP 0 806 308 A1**
(43) Date de publication de la demande: **12.11.1997**
(21) Numéro de dépôt: 97430011.3
(22) Date de dépôt: 07.05.1997
(51) Int. Cl.: B60D 1/02

(54) **Verrou d'attelage à dispositif automatique de manoeuvre à l'ouverture**

(30) Priorité: 10.05.1996 FR 9605836
(71) Demandeur: Racchini, Guy, 84300 Cavaillon (FR)
(72) Inventeur: Racchini, Guy, 84300 Cavaillon (FR)

(57) **Abrégé**

L'appareil d'attelage équipé conformément à l'invention comporte trois vérins (20, 23 et 25) qui, lorsqu'ils sont alimentés à partir d'une source de pression (27) par un distributeur unique (28), déverrouillent l'attelage par action sur un verrou frontal, élèvent la broche (4) par action sur un étrier (6) et placent en attente un levier (8) d'entretoisement pour bloquer la broche (4) dans sa position haute.

L'intérêt de l'invention réside dans la centralisation de la commande de l'ouverture d'un attelage en un endroit aisé d'accès et dans la suppression d'une intervention manuelle sur chacun des organes de l'attelage dont l'accès est malcommode et peut être dangereux.

## Description

La présente invention concerne les attelages de remorques aux véhicules tracteurs dans le domaine notamment des poids lourds. Plus précisément, elle concerne les attelages dits pneumatiques, c'est-à-dire ceux qui mettent en oeuvre une mâchoire de pincement de l'oeil d'attelage contre la broche qui la traverse, cette mâchoire étant actionnée par un vérin pneumatique simple effet.

Ce type d'attelage est présent sur le marché depuis de nombreuses années. L'une de ses caractéristiques réside dans la possibilité de le placer dans un état d'attente dans lequel le simple engagement de l'oeil enclenchera son brochage s'accompagnant de la mise en place de plusieurs verrous de sécurité. Il est alors possible de commander manuellement l'alimentation du vérin agissant sur la mâchoire de pincement.

La séparation de l'attelage présente plus de difficultés pour l'opérateur, surtout lorsque cet attelage est disposé en partie basse, c'est-à-dire relativement proche de la chaussée.

En effet, pour séparer l'attelage, il convient tout d'abord de purger le vérin agissant sur la mâchoire. Ceci est obtenu par une poignée qui doit se trouver au voisinage de l'attelage donc d'accès mal commode car cette poignée possède une autre fonction, à savoir de bloquer un verrou de sécurité latéral. Après avoir agi sur cette poignée, donc débloqué le vérin de sécurité latéral, il convient d'actionner manuellement un second verrou frontal, de relever la broche à la main et enfin d'agir sur la partie mobile du verrou latéral pour le placer dans une position apte à constituer une entretoise empêchant la broche de redescendre sous l'effet de son propre poids et d'un ressort tendant à assister l'effet de la gravité.

Ainsi, l'attelage est-il maintenu en état d'attente pour recevoir un autre oeil . Le passage de celui-ci sous la broche provoque son soulèvement qui libère l'entretoise de maintien et l'attelage se referme.

On comprend de ce qui précède et de ce qui sera illustré par la suite de cette description, que l'opérateur a plusieurs opérations à réaliser pour "ouvrir" l'attelage souvent des conditions mal commodes.

La présente invention entend remédier à ces inconvénients en proposant une commande centralisée du déverrouillage d'un attelage grâce à laquelle l'opérateur n'a plus qu'une action à réaliser dans des conditions de confort amélioré.

A cet effet, l'invention a donc pour objet un dispositif automatique de manoeuvre à l'ouverture des verrous de sécurité d'un attelage de remorque à un véhicule tracteur.

De manière connue, cet attelage comporte :
- un guide en forme de V horizontal,
- une platine verticale en une seule pièce avec le guide à l'arrière de celui-ci,
- une broche orthogonale à l'arête du guide et montée à coulissement dans les deux ailes de ce dernier,
- un étrier de manoeuvre de la broche articulé à la platine et à la broche par l'intermédiaire d'un levier de liaison,
- un verrou frontal articulé au guide sur la branche supérieure du V et rappelé autour de son articulation contre le levier de liaison de la broche à l'étrier de manière à former une butée au soulèvement de la broche lorsque celle-ci est en position basse,
- un verrou latéral articulé à l'étrier et comportant une première encoche en regard d'un doigt d'accrochage porté pour le guide, lorsque la broche est en en position basse, ce verrou étant soumis à un organe élastique tendant à écarter l'encoche du doigt par pivotement autour de son articulation sur l'étrier, ce verrou comportant une seconde encoche plus éloignée que la première de son articulation à l'étrier.
- une came pivotant entre une position de maintien du verrou engagé sur le doigt par sa première encoche et une position libérant le verrou pour lui permettre de s'écarter du doigt sous l'effet de l'organe élastique,
- un vérin perpendiculaire à la platine et dont la tige est équipée d'une mâchoire située à l'intérieur du guide et susceptible d'être rapprochée ou éloignée de la broche selon que le vérin est alimenté ou purgé,
- un distributeur de commande de l'alimentation et de la purge du vérin actionné par la came pivotante de sorte que la position de maintien de cette came corresponde à l'alimentation du vérin et l'autre position, à la purge de ce dernier.

Le dispositif de l'invention est caractérisé, en association avec l'attelage ci-dessus, par le fait qu'il comporte :
- un premier vérin attelé entre l'étrier et le guide dont l'alimentation produit le soulèvement de l'étrier,
- un second vérin porté par l'étrier et dont la tige est tournée vers le verrou frontal et forme un poussoir de ce verrou à l'encontre de l'effort de rappel lorsque ce vérin est alimenté,
- un troisième vérin porté par l'étrier et dont la tige est dirigée vers le verrou latéral et forme un poussoir de ce verrou à l'encontre de l'effet de l'organe élastique lorsque le vérin est alimenté,
- un distributeur monostable de commande simultanée de l'alimentation et de la purge des trois vérins, sa position stable correspondant à la purge des vérins et sa position instable, obtenue par action manuelle sur un bouton poussoir, correspondant à l'alimentation des vérins.

Ainsi pour "ouvrir" l'attelage il suffit, après avoir actionné la came pivotante, ce qui conduit à la purge du vérin associé à la mâchoire, et à la libération du verrou latéral, d'appuyer sur le bouton poussoir du distributeur monostable. Le verrou frontal est immédiatement libéré, le premier vérin alimenté ce qui provoque la levée de l'étrier donc de la broche et le troisième vérin alimenté, ce qui ramène le verrou latéral contre le doigt de verrouillage porté par le guide ce qui, en fin de levée de l'étrier, permet d'engager la seconde encoche sur ce doigt.

Le lâcher du bouton-poussoir purge les trois vérins. Le verrou frontal est rappelé contre le levier de liaison étrier-broche mais sans fonction de verrouillage tandis que le verrou latéral constitue une entretoise qui maintient l'étrier en position haute à l'encontre de l'effet de la gravité, d'un organe élastique d'abaissement de l'étrier (équipant l'attelage de manière connue) et du premier vérin non alimenté dont la tige tend à se rétracter sous l'effet d'un ressort de rappel interne.

De manière préférée, les trois vérins de l'invention sont à simple effet. Pour assurer un certain retard dans l'action du troisième vérin sur le verrou latéral on aura prévu une restriction de passage sur son conduit d'alimentation.

D'autres caractéristiques et avantages ressortiront de la description d'une réalisation de l'invention donnée ci-après à titre d'exemple.

Il sera fait référence aux dessins annexés parmi lesquels :
- la figure 1 est une représentation schématique de côté d'un attelage équipé conformément à l'invention,
- la figure 2 est une vue de face de cet attelage également schématique.

L'attelage tel qu'il existe sur le marché (par exemple commercialisé par la Société MG sous la référence Type 6) comporte une structure 1 semblable à une chape en forme de V horizontal qui forme un guide 2 solidaire d'une platine 3 située en arrière du guide au niveau de l'arête du V. Les deux ailes 2a et 2b du guide sont percées selon un axe orthogonal à l'arête du V pour recevoir à coulissement une broche 4 épaulée en partie supérieure pour reposer en position basse sur un appui correspondant prévu sur l'aile 2b du guide.

La broche 4 reçoit à son sommet un levier 5 qui forme une liaison articulée entre la broche et un étrier 6, lequel est articulé par sa partie arrière à la platine 3 qui comporte des paliers 3a et 3b à cet effet.

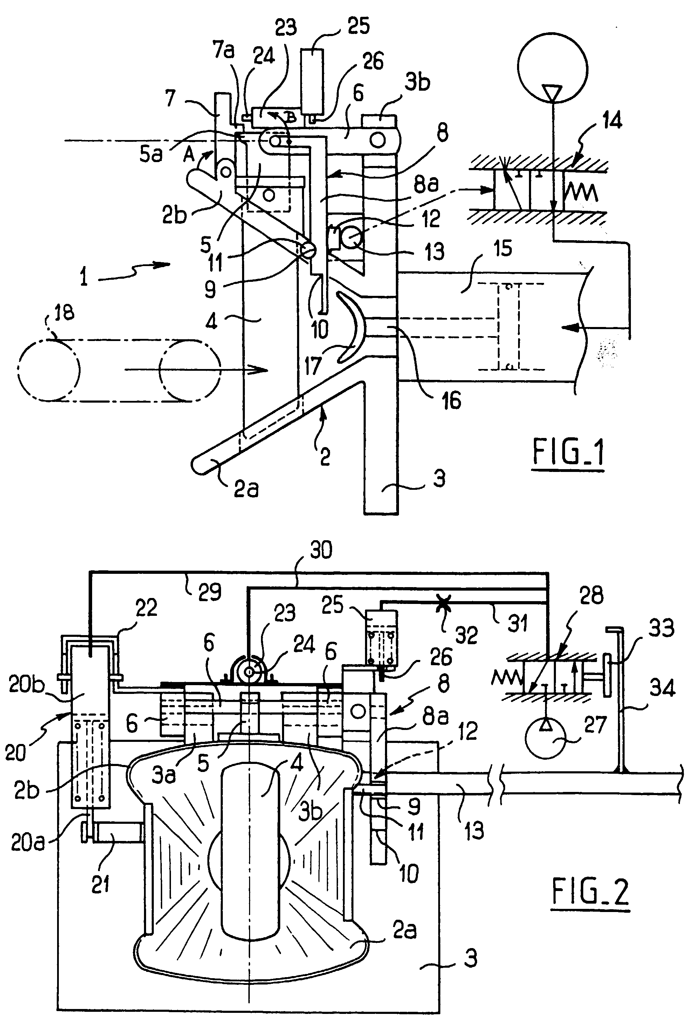

La partie supérieure 5a du levier 5 est conformée en une sorte de bec en saillie vers l'avant de l'appareil en direction d'un premier verrou frontal pivotant 7, articulé à sa base à l'aile 2a du guide 2 et soumis en permanence à un effort de rappel dons le sens A en direction du bec 5a. Le verrou 7 possède, en regard du levier 5, une saillie 7a qui, lorsque la broche est en position basse, se place au-dessus du bec 5a et interdit toute levée de cette broche. Ce verrou 7 n'est pas représenté à la figure 2. Lorsque la broche est en position haute, la saillie 7a prend appui sur le levier 5. Le verrou peut cependant s'escamoter au passage du bec 5a lorsque la broche 4 redescend du fait de la rampe inférieure dont est pourvu le bec 5a.

L'appareil possède de manière connue un second verrou latéral représenté par le levier coudé 8 articulé par l'extrémité de sa petite branche à l'étrier 6, sa grande branche 8a s'étendant vers le bas. Celle-ci présente une première encoche 9 et plus loin, du côté de son extrémité, une seconde encoche 10. En réalité, cette seconde encoche 10 n'est qu'un décrochement pour des raisons données plus loin. Ce levier de verrou est soumis à un effort constant (au moyen par exemple d'un ressort) tendant à le faire tourner autour de son articulation à l'étrier 6 dans le sens B, la branche 8a tendant alors à s'écarter d'un doigt de verrouillage 11 que porte latéralement le guide 2.

Pour contraindre l'encoche 9 à chevaucher le doigt 11, lorsque les deux sont en regard l'un de l'autre, c'est-à-dire lorsque la broche est en position basse, il existe une came 12 pivotante qui s'oppose dans une première position à l'effort dans le sens B auquel est soumis le verrou 8. Dans cet état, le verrou 8 interdit également toute possibilité de soulèvement de la broche 4, ce qui vient doubler le rôle du verrou frontal 7.

Cette came 12 est liée à un axe 13 de sa manoeuvre en pivotement. Elle est prolongée en direction d'un distributeur monostable 14 qui assure selon son état, l'alimentation et la purge d'un vérin (simple effet, pneumatique ou hydraulique) 15. Lorsque la came verrouille le levier 8, comme représenté à la figure 1, elle place le distributeur 14 dans son état d'alimentation du vérin 15. Lorsque cette came est dans une autre position (tournée de 90° par rapport à la figure 1), le distributeur est au repos (dans sa position stable) et le vérin 15 et purgé.

La tige 16 du vérin 15 porte une mâchoire 17 à son extrémité qui s'approche de la broche 4 quand le vérin est alimenté et s'en éloigne (en direction du fond du V) lorsque le vérin est purgé. Ainsi quand un anneau d'attelage tel que 18 est broché, il peut être pincé par la mâchoire 17 contre la broche 4.

Selon l'invention, l'appareil décrit ci-dessus est équipé d'un premier vérin 20 de soulèvement de l'étrier 6. Ce vérin 20 n'est visible que sur la figure 2. Il est articulé entre une paroi latérale du guide 2 par sa tige 20a (axe 21) et une chape 22, solidaire de l'étrier 6, par son corps 20b. Ce vérin est à simple effet avec une position de repos tige rentrée sous l'effet d'un ressort interne.

L'appareil comporte également un second vérin à simple effet 23 fixé à l'étrier 6 et dont la tige 24 est tournée vers le verrou frontal 7. Quand il est alimenté, la tige du vérin 23 sort et forme poussoir pour faire basculer le verrou 7 et dégager les saillie 7a et bec 5a en prise. Lorsqu'il est purgé, la tige de ce vérin se rétracte et le verrou frontal 7 est rappelé contre le levier 5.

Enfin, l'attelage comporte un troisième vérin 25 porté par l'étrier 6 et orienté de manière à présenter sa tige 26 tournée du côté du petit bras du verrou 8 vers le bas et au voisinage de l'extrémité de ce petit bras opposé à son articulation à l'étrier (on peut même prévoir une prolongation de ce petit bras au-delà de son extrémité au moyen par exemple d'une plaque ce qui permet, pour une force de poussée donnée, d'augmenter le couple appliqué au verrou 8 autour de son articulation).

Ces trois vérins sont reliés à une source d'alimentation 27 (figure 2) par l'intermédiaire d'un distributeur unique 28. Les conduits 29 et 30 d'alimentation des vérins 20 et 23 sont à conduits 29 et 30 d'alimentation des vérins 20 et 23 sont à pleine section tandis que le conduit 31 d'alimentation du vérin 25 comporte une restriction de passage 32 formant retardateur pour le déclenchement du vérin 25.

Le distributeur 28 est monostable dont l'état de repos correspond à la mise à l'échappement des trois vérins 20, 23 et 25. Son autre état est obtenu par l'actionnement d'un bouton-poussoir 33. Ce bouton-poussoir 33 est situé derrière un cache 34 solidaire de l'axe 13 de manoeuvre de la came 12 et d'actionnement du distributeur 14, lorsque l'orientation angulaire de cet axe correspond au blocage du verrou 8 par la came 12.

En fonctionnement, le dispositif se comporte de la manière suivante. On supposera que l'attelage est "fermé" sur un anneau tel que 18. On souhaite dételer la remorque de son véhicule tracteur.

L'opérateur agit, sur l'axe 13 au moyen d'une poignée non représentée, déportée à l'extrémité de cet axe pour en permettre un accès aisé. Il fait tourner celui-ci autour de son axe dans le sens des aiguilles d'une montre (dans le cas de la figure). Le distributeur 14 purge le vérin 15 et la mâchoire 17 s'écarte de la broche. Dans le même temps, le levier 8 libéré tourne dans le sens B et déverrouille l'étrier 6 par rapport au doigt 11. La rotation de l'axe 13 a permis également de découvrir le bouton-poussoir 33 en effaçant le cache 34.

L'opérateur appuie sur le bouton 33 qui lui aussi est déporté pour être placé dans un endroit aisément accessible. Le distributeur 28 permet ainsi l'alimentation des trois vérins 20, 23 et 25. Le vérin 23 efface le verrou frontal, le vérin 20 soulève l'étrier 6 tandis que le vérin 25 avec un léger retard, dû à la restriction 32, ramène le levier 8 au contact du doigt 11.

Lorsque l'opérateur relâche le bouton 33, les vérins 20 et 23 se purgent, et l'étrier redescend sous l'effet des différentes forces auxquelles il est soumis. Cette descente est stoppée par l'appui du décrochement 10 sur le doigt 11. Ce décrochement 10 n'est pas une véritable encoche pour permettre au levier 8 de glisser au-delà de ce décrochement dans le sens de la levée. De manière connue, la broche 4 est en position basse écartée de l'aile 2a du guide d'une distance inférieure à l'épaisseur de l'anneau d'attelage.

La purge du vérin 25 est également réalisée lorsque le bouton 33 est relâché mais elle s'opère avec un certain retard du fait de la restriction 32, ce qui permet d'être certain qu'à la descente de l'étrier, le levier 8 et bien toujours au contact du doigt 11.

L'attelage est alors en attente dans sa position ouverte. Il est alors possible d'en extraire l'anneau et/ou d'en introduire un. L'attelage, à la fermeture, fonctionne de manière connue, le dispositif de déverrouillage centralisé de l'invention n'interférant pas avec le fonctionnement habituel d cet appareil.

## Revendications

1. Dispositif automatique de manoeuvre à l'ouverture des verrous (7,8) de sécurité d'un attelage de remorque à un véhicule tracteur, cet attelage (1) comportant :
- un guide (2) en forme de V horizontal,
- une platine (3) verticale en une seule pièce avec le guide à l'arrière de celui-ci,
- une broche (4) orthogonale à l'arête du guide et montée à coulissement dans les deux ailes de ce dernier,
- un étrier (6) de manoeuvre de la broche articulé à la platine (3) et à la broche (4) par l'intermédiaire d'un levier (5) de liaison,
- un verrou (7) frontal articulé au guide (2) sur la branche supérieure (2b) du V et rappelé autour de son articulation contre le levier (5) de liaison de la broche (4) à l'étrier (6) de manière à former une butée au soulèvement de la broche lorsque celle-ci est en position basse,
- un verrou (8) latéral articulé à l'étrier (6) et comportant une encoche (9) en regard d'un doigt (11) porté par le guide lorsque la broche (4) est en position basse, ce verrou (7) étant soumis en permanence à un organe élastique tendant à écarter l'encoche du doigt par pivotement (B) autour de son articulation sur l'étrier (6), ce verrou (B) comportant un décrochement (10) plus éloigné que l'encoche (9) de l'articulation du verrou (8) à l'étrier (6),
- une came pivotante entre une position de maintien du verrou (8) engagé sur le doigt par l'encoche et une position libérant le verrou pour lui permettre de s'écarter du doigt (11) sous l'effet de l'organe élastique,
- un vérin (15) perpendiculaire à la platine et dont la tige (16) est équipée d'une mâchoire (17) située à l'intérieur du guide (2) et susceptible d'être rapprochée ou éloignée de la roche (4) selon que le vérin (15) est alimenté ou purgé,
- un distributeur (14) de commande de l'alimentation et de la purge du vérin (15) actionné par la came (12) pivotante de sorte que la position de maintien de cette came (12) corresponde à l'alimentation du vérin et l'autre position à la purge de ce dernier.
Le dispositif automatique étant caractérisé en ce qu'il comporte :
- un premier vérin (20) attelé entre l'étrier (6) et le guide (2) dont l'alimentation produit le soulèvement de l'étrier (6),
- un second vérin (23) porté par l'étrier (6) et dont la tige (24) est tournée vers le verrou (7) frontal et forme un poussoir de ce verrou à l'encontre de l'effort de rappel (A) lorsque ce vérin est alimenté,
- un troisième vérin (25) porté par l'étrier (6) et dont la tige (26) est dirigée vers le verrou (8) latéral et forme un poussoir de ce verrou à l'encontre de l'effet (B) de l'organe élastique lorsque le vérin est alimenté,
- un distributeur monostable (28) de commande simultanée de l'alimentation et de la purge des trois vérins (20, 23, 25), sa position stable correspondant à la purge des vérins et sa position instable, obtenue par action manuelle sur un bouton-poussoir (33), correspondant à l'alimentation des vérins.

2. Dispositif selon la revendication 1, caractérisé en ce que les vérins (20, 23, 25) sont à simple effet ayant, purgés, leur tige rentrée, le conduit d'alimentation du troisième vérin (25) comportant une restriction de passage (32).

3. Dispositif selon la revendication 1 ou la revendication 2, caractérisé en ce qu'un cache (34) est associé à la came pivotante (12) qui masque le bouton-poussoir (33) lorsque la came est dans sa position de maintien et qui le découvre lorsqu'elle est dans son autre position.
